Europäisches Patentamt

European Patent Office

Office européen des brevets

(11) Publication number: **0 038 923**

**B1**

(12) **EUROPEAN PATENT SPECIFICATION**

(45) Date of publication of patent specification: **26.06.85**

(21) Application number: **81101717.7**

(22) Date of filing: **09.03.81**

(51) Int. Cl.⁴: **B 23 C 5/20,** B 23 C 5/06

(54) **Rotary tool cutting cartridge.**

<table>
<tr><td>

(30) Priority: **13.03.80 US 129904**

(43) Date of publication of application:
**04.11.81 Bulletin 81/44**

(45) Publication of the grant of the patent:
**26.06.85 Bulletin 85/26**

(84) Designated Contracting States:
**BE DE FR GB IT NL SE**

(56) References cited:
**DE-C- 558 905**
**FR-A-1 252 422**
**US-A-2 233 724**
**US-E- 26 637**

**MASCHINENMARKT, vol. 83, no. 33, 1977,**
**Würzburg, W. GRÄFE et al. "Wendeplatten in**
**enuer Konzeption: Lochplatten in**
**rundlaufenden Werkzeugen", pages 649 to 652**

</td><td>

(73) Proprietor: **Briese, Leonard A.**
**Los Angeles California (US)**

(72) Inventor: **Briese, Leonard A.**
**Los Angeles California (US)**

(74) Representative: **Goddar, Heinz J., Dr.**
**FORRESTER & BOEHMERT Widenmayerstrasse**
**4/I**
**D-8000 München 22 (DE)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a cutting cartridge for rotary cutting tools.

Rotary cutting tools are characterized by the use of round cutting inserts which take the shape of a flat washer and which serve as the cutting surfaces of the rotary cutting tool. A representative example of such rotary cutting tools is disclosed in United States Patent Re. 26,637.

Characteristically, the cutting inserts are mounted on a base portion of a rotary cutting tool to rotate about their own central longitudinal axis when operationally placed in contact with a workpiece. The rotation of the inserts is caused by friction between the cutting inserts and the workpiece and is continuous for as long as the cutting tool and the workpiece are in contact with each other. The speed of rotation of the insert is controllable by adjusting the radial rake of the cutting inserts.

In general, increasing the radial rake of a cutting insert will serve to increase the speed of rotation of the cutting insert and increase the dissipation of heat attendant to operation of a rotary cutting tool. Higher speeds are usually involved when the rotary cutting tool is used with harder materials, whether milling, cathing or boring is being done.

Prior art rotary cutting tools have involved the cutting inserts being mounted on the cutting surface of the tool by the use of a bolt or the like extending through the center of the insert and into a protruding base portion of the rotary cutting tool. Rotation of each cutting insert about its longitudinal axis has been accommodated by the use of a variety of bearings and bushings which are mounted with the cutting inserts on the supporting portion of the rotary cutting tool.

In the past, replacement of damaged or dulled cutting inserts would involve a major disassembly of a rotary cutting tool. Such disassembly procedure is time consuming, inconvenient, generally costly, and can involve a substantial waste of machine operating time. Having duplicate tools is not desirable from the standpoint of cost.

Further there is known a rotary cutting tool cartridge comprising a stator having a base portion and a spindle portion and a rotor rotatably mounted on the spindle portion of said stator, and a cutting insert fixedly mounted on said rotor (see FR—A—1 252 422, especially Fig. 6). The stator of this known cartridge is fixedly mounted in the rotary cutting tool. So an exchange of the cartridge is very time wasting and inconvenient. Also in this known state of the art it is not possible to change the rake mode by a simple change of the cutting cartridge.

It is accordingly, a primary object of the present invention to provide cutting cartridges that are exchangeably mountable in the rotary cutting tools.

It is accordingly, a primary object of the present invention to provide cutting cartridges that permit new cutting inserts for rotary cutting tools to be easily, quickly, and cheaply replaced or installed. Cutting cartridges of the type shown in the precharacterising part of claim 1 are according to the present invention characterized in that the base portion and the spindle portion of the stator are adapted to be slip fit onto the rotary cutting tool for use thereon, whereby the base portion of the stator includes an end portion shaped to form a first half of a dovetail junction for engagement with a second half of the dovetail junction formed on the rotary cutting tool. So, the cartridge is easily insertable For an exchange of the cartridge there is no need for loosening screws or similar relatively complicated junctions. Furthermore, merely by providing cartridges with different shapes of the first half of the dovetail junction, the tool can be operated in either a positive rake mode or a negative rake mode.

It is another object of the present invention to provide cutting cartridges for rotary cutting tools that allow the tools to be quickly adapted to have the cutting inserts rearranged to have the tool operated in either a positive rake mode or a negative rake mode.

It is a further object of the present invention to provide a cutting cartridge for rotary cutting tools that is disposable.

Further objects and the many attendant advantages of the invention may be best understood by reference to the following detailed description of an embodiment taken in conjunction with the accompanying drawings in which like reference symbols designate like parts through the figures thereof.

Figure 1 is an exploded perspective view of a cutting cartridge in accordance with the invention.

Figure 2 is a side cross-sectional view of a cutting cartridge in accordance with the invention.

Figures 3 and 4 are perspective and side views, respectively, of a cutting cartridge situated to be operated in a negative rake mode.

Figures 5 and 6 are perspective and side views, respectively, of a cutting cartridge situated to be operated in a positive rake mode.

Figure 7 is a top view of a rotary cutting tool generally illustrating the manner in which cutting cartridges are mounted thereon.

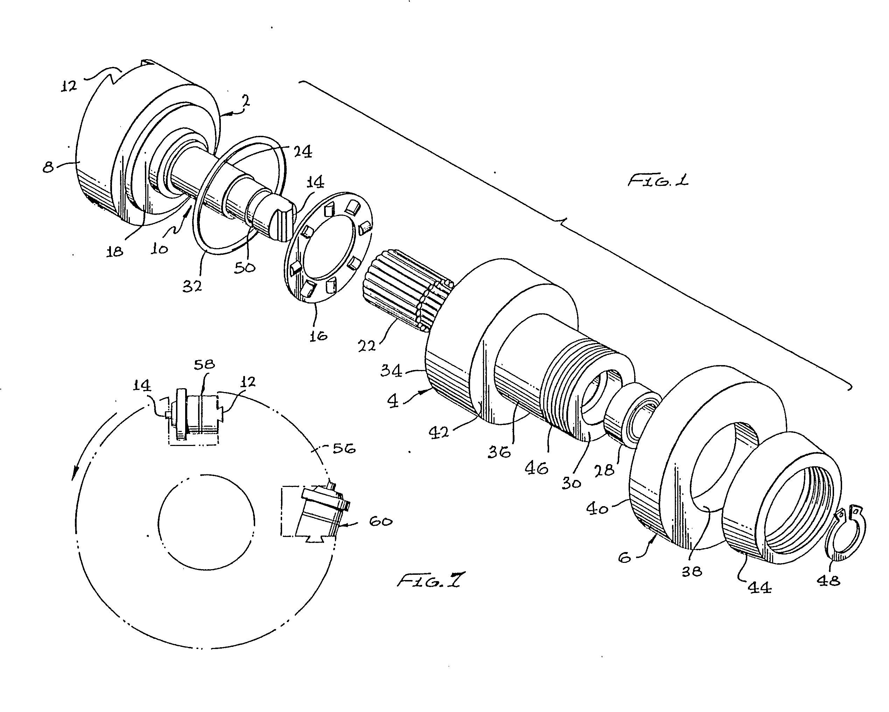

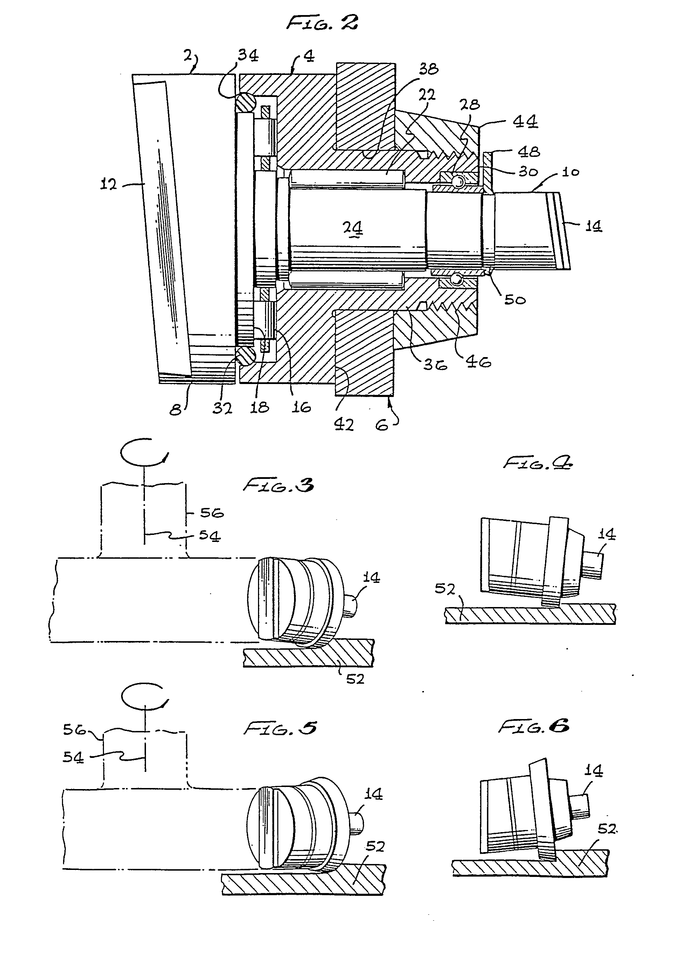

Referring to Figures 1 and 2 of the drawings, the principle elements of a cutting cartridge in accordance with the invention are a stator 2, a rotor 4, and a cutting insert 6.

Ths stator 2 is configured to have a base portion 8 and a spindle portion 10 which serves to receive and have mounted thereon the rotor 4 in a fashion that is described in greater detail hereinafter.

Referring briefly to Figure 7, a cutting cartridge is mounted on a rotary cutting tool by having the end 12 of the base 8 and the end 14 of the spindle 10 situated in gaps provided in the rotary cutting tool to receive a cutting cartridge. As shown, the base 8 of the stator 2 may be shaped to form one-half of a dovetail junction to permit simple mounting of the end 12 of the cutting cartridge on a rotary cutting tool. The end 14 of the spindle 10 may be appropriately flattened, pointed or otherwise shaped to snugly fit into a corresponding gap provided in the rotary cutting tool to receive the spindle 10. Conventional means of securing the cutting cartridge in the gaps, such as with clips, screws, and the like, may be used.

The end 12 of the base 8 may be shaped to have the male portion of the dovetail junction as shown in Figure 2 through 6 or the female portion of the dovetail junction as shown in Figure 1.

Referring once again to Figures 1 and 2, the rotor 4 is mounted on the spindle 10 of the stator 2 in a manner to permit concentric rotation about the longitudinal axis of the spindle 10. Accordingly, a thrust bearing 16 is situated against a platform 18 of the base 8 to receive an abutting interior shoulder 20 of the rotor 4. Needle bearings 22 are situated around a central portion 24 of the spindle 10 to snugly receive and support a central longitudinal surface 26 of the rotor 4.

A third ball bearing 28 is situated just inwardly of the end 14 of the spindle 10. It snugly receives the interior end surface 30 of the rotor 4.

An O-ring 32 may be used to seal the lower end of the interior cavity formed between the stator 2 and the rotor 4 by being placed and sized to be snugly fit around the outer periphery of the platform 18 on the base 8 of the stator 2. The diameter of the O-ring 32 should be appropriately sized to closed the gap between the base 8 of the stator 2 and the inner edge 34 of the rotor 4 adjacent said base 8 of the stator 2.

As an alternative to the O-ring 32, a C-ring may be used to facilitate the insertion and changing of the seal as may be necessary. A high temperature composite material may be used.

The cutting insert 6 is mounted on a spindle portion 36 of the rotor 4 by simply having the central opening 38 thereof situated around the spindle 36 of the rotor 4. The inner diameter of the central opening 38 may be slightly greater than the outer diameter of the spindle 36. One face 40 of the cutting insert is positioned to abut an outer shoulder portion 42 of the rotor 4. The cutting insert 6 is retained in such position around the spindle 36 and against the shoulder 42 of the rotor 4 by use of a threaded nut 44 which is threaded on threads 46 formed for this purpose at the end of the spindle 36 of the rotor 4.

A curved snap ring 38 may be fitted into a groove 50 near the end 14 of the spindle 10 of the stator 2 to ensure that the assembled cutting cartridge remains assembled.

As previously discussed, the end 12 of the stator 2 serves as one connection to a rotary cutting tool by forming one half of the dovetail junction. Referring now to Figures 2, 3, and 4, it can be observed that the end 12 can be cut and shaped to have the end surface form a non-perpendicular angle with the longitudinal axis of the stator 2. The result would be to have the cutting cartridge canted in relation to the longitudinal axis of a milling tool and to a workpiece 52 as shown in Figures 3 through 6.

Referring to Figures 3 and 4, the cutting cartridge in accordance with the present invention is illustrated in a negative axial rake mode. As shown, a negative axial rake mode is characterized by the end 14 of the stator 2 generally pointing towards the workpiece 52.

By comparison, the cutting cartridge is illustrated in a positive axial rake mode in Figures 5 and 6. As shown, a positive axial rake mode is characterized by the end 14 of the stator 2 generally pointing away from the workpiece 52.

As shown in Figures 3 and 5, both positive axial rake and negative axial rake modes can be accomplished by having the portion of the dovetail junction formed on the rotary cutting tool situated parallel to the longitudinal axis 54 of the rotary cutting tool 56, such that the cutting cartridge will always be mounted thereon with its longitudinal axis at an angle to the surface of the workpiece 52.

Referring to Figure 7, it can be observed that radial rake can also be controlled by appropriately forming the dovetail junction at the end 12. As shown, cutting cartridge 58 is mounted on a cutting tool 56 to have negative radial rake. A cutting cartridge 60 is shown with a greater negative radial rake. Clearly, positive radial rake would result if the cartridges 58 and 60 were turned by 180 degrees around the longitudinal axis thereof and mounted on the tool 56.

The elements of the cutting cartridge as described hereinabove may be manufactured by using conventional prior art technology. The various elements of the cutting cartridge may be made of metal with the exception of the O-ring 32 which may be made of high temperature composite material that is commercially available and the cutting insert 6 which is normally made with carbide, steel, or other suitable material.

From the foregoing description it is now clear that cutting cartridges, in accordance with the present invention, are a unitary element that may be readily installed and removed from a rotary cutting tool such as the milling tool graphically illustrated in Figures 3, 5 and 7. The ease with which the cutting cartridges may be installed and removed permits a machine shop to simply maintain an inventory of cutting cartridges which may have different rakes and which are maintained with new cutting inserts. The result would be to have rotary cutting tools readily serviced to provide the desired means and method of metal working.

It is to be understood that a variety of different cutting inserts may be used with the cutting cartridges in accordance with the present invention in a manner consistent with the state of the art.

It is to be further understood that cutting cartridges in accordance with the present invention, may be used on lathing tools and boring tools as well as with milling tools as illustrated in the drawings included herewith.

While a preferred embodiment of the present invention has been described hereinabove, it is intended that all matter contained in the above description and shown in the accompanying drawings be interpreted as illustrative and not in a limiting sense and that all modifications, constructions, and arrangements which fall within the scope of the invention as claimed may be made.

## Claims

1. A cutting cartridge for rotary cutting tools, said cutting cartridge comprising:
   a stator (2) having a base portion (8) and a spindle portion (10);
   a rotor (4) rotatably mounted on the spindle portion of said stator;
   a cutting insert (6) fixedly mounted on said rotor;
   bearing means (16, 22) interposed between said stator and said rotor to permit rotation of said rotor on said stator wherein said cutting insert is rotated with said rotor; and means (44, 46) for securing said cutting insert on said rotor; characterized in that said base portion (8) and said spindle portion (10) of said stator (2) are adapted to be slip fit onto a rotary cutting tool (56) for use thereon, said base portion (8) of said stator (2) including an end portion (12) shaped to form a first half of a dovetail junction, for engagement with a second half of said dovetail junction formed on the rotary cutting tool.

2. The cutting cartridge defined by Claim 1, characterized in that said bearing means are including:
   needle bearings (22) mounted between said spindle portion (10) of said stator (2) and said rotor (4); and
   a thrust bearing (16) mounted between said base portion (8) of said stator (2) and said rotor (4).

3. The cutting cartridge defined by Claim 1 or Claim 2 characterized in that the end portion of said base portion (8) of said stator (2) is shaped to be reversibly slip fit onto the rotary cutting tool so as to allow the cutting cartridge to be operated in a positive rake mode or a negative rake mode.

4. The cutting cartridge defined by one of the Claims 1 to 3 characterized in that sealing means (32) for forming a seal between said stator (2) and said rotor (4) are provided, wherein said sealing means (32) are positioned between said base portion (8) of said stator (2) and said rotor (4).

5. The cutting cartridge defined by the Claim 4, characterized in that the sealing means (32) provide a seal between the base portion (8) of said stator (2) and the flange portion of said rotor (4).

## Patentansprüche

1. Auswechselbarer Schneideinsatz für ein rotierendes Schneidwerkzeug, aufweisend:
   Einen Stator (2) mit einem Grundbereich (8) und einem Spindelbereich (10), einen Rotor (4), drehbeweglich befestigt an dem Spindelbereich des Stators;
   einen Schneideinsatz, fest eingebaut befestigt;

Lagermittel (16, 22) angeordnet zwischen dem Stator und dem Rotor, um eine Drehung des Rotors an dem Stator zu erlauben, dadurch gekennzeichnet, daß der Grundbereich (8) und der Spindelbereich (10) des Stators (2) geeignet sind, fest anliegend auf ein rotierendes Schneidwerkzeug zu gleiten, zur Verwendung an diesem, wobei der Grundbereich (8) des Stators (2) einen Endbereich (12) aufweist, so ausgeformt, daß er die erste Hälfte einer Schwalbenschwanzverbindung bildet, zum Zusammenwirken mit einer zweiten Hälfte der Schwalbenwanzverbindung, ausgebildet an dem rotierenden Schneidwerkzeug.

2. Schneideinsatz nach Anspruch 1, dadurch gekennzeichnet, daß die Lagermittel aufweisen:
   Nadellager (22), angebracht zwischen dem Spindelbereich (10) des Stators (2) und dem Rotor (4); und ein Drucklager (16), befestigt zwischen dem Grundbereich (8) des Stators (2) und dem Rotor (4).

3. Schneideinsatz nach Anspruch 1 oder 2, dadurch gekennzeichnet, daß der Endbereich des Grundbereichs (8) des Stators (2) ausgeformt ist, um umkehrbar fest anliegend auf das rotierende Schneidwerkzeug zu gleiten, um dem Schneideinsatz zu erlauben, in einer positiven Winkelweise oder einer negativen Winkelweise betrieben zu werden.

4. Schneideinsatz nach einem der Ansprüche 1 bis 3, dadurch gekennzeichnet, daß Abdichtmittel (32) vorgesehen sind, zur Ausbildung einer Abdichtung zwischen dem Stator (2) und dem Rotor (4) wobei die Abdichtmittel (32) zwischen dem Grundbereich (8) des Stators (2) und dem Rotor (4) angeordnet sind.

5. Schneideinsatz nach Anspruch 4, dadurch gekennzeichnet, daß die Abdichtmittel (32) für eine Dichtung zwischen dem Grundbereich (8) des Stators (2) und dem Flanschbereich des Rotors (4) sorgen.

## Revendications

1. Cartouche de coupe pour outils de coupe rotatifs, ladite cartouche de coupe comprenant un stator (2) ayant une partie de bace (8) et une partie d'arbre (10); un rotor (4) monté de façon rotative sur l'arbre dudit stator; un élément de coupe (6) monté de façon fixe sur ledit rotor; des moyens de palier (16, 22) interposés entre ledit stator et ledit rotor pour permettre la rotation dudit rotor sur ledit stator, dans lequel l'élément de coupe tourne avec ledit rotor; des moyens de fixation (44, 46) dudit élément de coupe sur ledit rotor, caractérisée en ce que ladite portion de base (8) et ledit arbre (10) dudit stator (2) sont adaptés pour être ajustés par coulissement sur un outil de coupe rotatif (56) en vue de l'utilisation sur celui-ci, ladite partie de base (8) dudit stator (2) comprenant une partie terminale (12) conformée pour former une première moitié de jonction en queue d'aronde pour l'engagement avec une deuxième moitié de ladite jonction de queue d'aronde formée sur l'outil de coupe circulaire.

2. Cartouche de coupe selon la revendication 1, caractérisée en ce que lesdits moyens de palier comprennent:

— un roulement à aiguilles (22) monté entre ladite partie d'arbre (10) dudit stator (2) et ledit rotor (4) et un palier de butée (16) monté entre la portion de base (8) dudit stator (2) et ledit rotor (4).

3. Cartouche de coupe selon la revendication 1 ou 2, caractérisée en ce que la partie terminale de la partie de base (8) dudit stator (2) est conformée pour être ajustée par coulissement de façon réversible sur l'outil de coupe, rotatif, ainsi que pour permettre à la cartouche de coupe de fonctionner dans le mode d'inclinaison aussi bien positif que négatif.

4. Cartouche de coupe selon l'une des revendications 1 à 3, caractérisée en ce qu'elle comporte des moyens d'étanchéité (32) pour former un joint étanche entre ledit stator (2) et ledit rotor (4), lesdits moyens d'étanchéité (32) étant placés entre ladite partie de base (8) dudit stator (2) et ledit rotor (4).

5. Cartouche de coupe selon la revendication 4, caractérisée en ce que les moyens d'étanchéité (32) forment une fermeture étanche entre la partie de base (8) dudit stator (2) et la partie de rebord dudit rotor (4).

FIG.1

0 038 923

*FIG. 2*

*FIG. 3*

*FIG. 4*

*FIG. 5*

*FIG. 6*